# EUROPÄISCHE PATENTSCHRIFT

(11) **EP 2 955 068 B1**
(45) Veröffentlichungstag und Bekanntmachung des Hinweises auf die Patenterteilung: **11.10.2017**
(21) Anmeldenummer: 15168288.7
(22) Anmeldetag: 20.05.2015
(51) Int. Cl.: B60R 25/20

(54) **FAHRZEUG MIT IDENTITÄTSPRÜFVORRICHTUNG**
VEHICLE WITH IDENTITY TEST DEVICE
VÉHICULE DOTÉ D'UN DISPOSITIF DE CONTRÔLE D'IDENTITÉ

(30) Priorität: 10.06.2014 DE 102014008174
(43) Veröffentlichungstag der Anmeldung: 16.12.2015
(73) Patentinhaber: CLAAS Tractor S.A.S., 78141 Vélizy-Villacoublay Cedex (FR)
(72) Erfinder: Guillaume, Patrick, 92370 Chaville (FR)
(74) Vertreter: Budach, Steffen

(56) Entgegenhaltungen:
- EP-A1- 2 144 206
- WO-A1-92/02702
- WO-A1-2008/044092
- WO-A1-2008/053274
- DE-A1-102008 025 669

## Beschreibung

Die vorliegende Erfindung betrifft ein Fahrzeug, insbesondere ein landwirtschaftliches Fahrzeug, mit Mitteln zum Überprüfen der Berechtigung eines potenziellen Benutzers des Fahrzeugs zu dessen Nutzung.

Aus EP 0 870 654 B1 ist ein Fahrzeug nebst zugehörigem Schlüssel bekannt, bei dem der Schlüssel, wenn er in ein Schloss des Fahrzeugs eingeführt ist, eine Identitätsinformation mittels eines elektro-optischem Senders an einen Empfänger im Schloss überträgt. Die Identitätsinformation wird von einem lokalen Prozessor mit gespeicherter Identitätsinformation verglichen und bei Übereinstimmung werden Funktionen des Fahrzeugs wie etwa eine automatische Anpassung der Sitzstellung an einen Fahrer, dem die empfangene Identitätsinformation zugeordnet ist, ausgelöst.

Während eine automatische Anpassung der Sitzstellung an einen Fahrer in wenigen Sekunden durchführbar ist, benötigen andere eine Nutzung des Fahrzeugs vorbereitende Maßnahmen deutlich längere Zeit, die der Fahrer nach Einführen des Schlüssels ins Zündschloss abwarten muss, bevor er die Nutzung des Fahrzeugs aufnehmen kann. Dies ist insbesondere dann lästig, wenn bereits das Erreichen des Zündschlosses mühsam und zeitaufwändig ist, insbesondere, wenn, wie bei vielen landwirtschaftlichen Fahrzeugen der Fall, die Fahrerkabine so hoch über dem Boden liegt, dass sie nur über eine außen am Fahrzeug ausgebildete Leiter zugänglich ist.

Aufgabe der vorliegenden Erfindung ist, ein Fahrzeug zu schaffen, das dem Benutzer einen verbesserten Komfort bietet, insbesondere ein Fahrzeug, bei dem unnötige Wartezeiten bei Inbetriebnahme des Fahrzeugs vermieden werden.

Die Aufgabe wird gelöst, indem bei einem Fahrzeug, insbesondere einem landwirtschaftlichen Fahrzeug, das eine Fahrerkabine, eine Kommunikationsschnittstelle zum berührungslosen Empfang einer Identitätsinformation und eine Steuereinheit zum Prüfen der Identitätsinformation und Starten eines oder mehrerer Subsysteme des Fahrzeugs bei positivem Ausgang der Prüfung aufweist, die Fahrerkabine über eine Leiter zugänglich ist und die Kommunikationsschnittstelle benachbart zur Leiter angeordnet ist, um von einem Transponder, wenn sich dieser in einem Erfassungsbereich der Kommunikationsschnittstelle am Fuß der Leiter befindet, die Identitätsinformation zu empfangen. So kann die Steuereinheit bereits auf die Ergebnisse der Prüfung reagieren und Subsysteme starten, noch bevor der Fahrer die Fahrerkabine erreicht hat, so dass, wenn er in der Fahrerkabine Platz genommen hat und zum Losfahren bereit ist, die Subsysteme bereits gestartet sind und die Wartezeit bis zur vollen Einsatzfähigkeit des Fahrzeugs entsprechend verkürzt ist.

Zu den auf diese Weise gestarteten Subsystemen kann insbesondere ein Stellglied gehören, das zum Bewegen einer Tür der Fahrerkabine in eine offene Stellung dient. Dies erspart es dem Fahrer, die Tür selbst zu handhaben, während er auf der Leiter steht, und erleichtert so das Erreichen der Fahrerkabine.

Ein weiteres solches Subsystem, das den Zugang zur Fahrerkabine erleichtert, kann eine Leuchte sein, insbesondere eine Leuchte zum Beleuchten der Leiter.

Landwirtschaftliche Fahrzeuge müssen einen Batteriehauptschalter aufweisen, der, wenn das Fahrzeug abgestellt wird, die Fahrzeugbatterie vom Bordnetz des Fahrzeugs trennt. Solange die Batterie abgetrennt ist, sind Subsysteme, die ausschließlich durch die Batterie gespeist werden, nicht einsatzfähig. Indem der Hauptschalter selber ein Subsystem darstellt, das bei positiver Prüfung der Identitätsinformation gestartet wird, wird die Voraussetzung geschaffen, um auch die batteriegespeisten Subsysteme starten zu können.

Die Kommunikationsschnittstelle und die Steuereinheit müssen auch bei offenem Batteriehauptschalter funktionsfähig sein. Zu diesem Zweck verfügen die Funkschnittstelle und die Steuereinheit über einen eigenen Energiespeicher Ein solcher Energiespeicher sollte zweckmäßigerweise über das Bordnetz ladbar sein, während das Fahrzeug im Betrieb und der Hauptschalter geschlossen ist.

Vorzugsweise gehört zu den von der Steuereinheit nach erfolgreicher Prüfung der Identitätsinformation gestarteten Subsystemen auch ein Bordcomputer. Zu dessen Aufgaben gehört es regelmäßig, bei jedem Start des Fahrzeugs diverse Prüfungen durchzuführen, beispielsweise die Funktionsbereitschaft von Sensoren zu verifizieren, Parametereinstellungen von Subsystemen wie etwa eines Dreschwerks, wenn das Fahrzeug ein Mähdrescher ist, abzufragen, um ein ordnungsgemäßes Funktionieren eines solchen Subsystems bei Betriebsaufnahme garantieren zu können, etc. die Erfindung ermöglicht es insbesondere einem solchen Bordcomputer, einen Teil seiner vor einem Start des Fahrzeugs zu erledigenden Aufgaben auszuführen, noch bevor der Fahrer die Fahrerkabine erreicht hat, und so die Zeit, die der Fahrer mit Warten auf die Startbereitschaft des Fahrzeugs verbringt, zu verkürzen.

Ein weiteres Subsystem kann ein Stellglied zum Einstellen des Fahrersitzes sein. Ein frühzeitiger Start dieses Subsystems kann dazu führen, dass der Einstellvorgang des Fahrersitzes bereits abgeschlossen ist, wenn der Fahrer die Fahrerkabine erreicht, so dass er stets einen für ihn passend eingestellten Fahrersitz vorfindet.

Ein weiteres Subsystem kann im Rahmen der Erfindung eine Heizung, eine Lüftung oder eine Klimaanlage der Fahrerkabine sein. Die Zeit, die ein solches Subsystem braucht, um das Klima in der Fahrerkabine merklich zu beeinflussen, ist im Allgemeinen wesentlich länger als die Zeit, die der Fahrer braucht, um über die Leiter zur Fahrerkabine hochzusteigen. Hier liegt der Zugewinn an Komfort für den Fahrer im Wesentlichen darin begründet, dass er, um das Subsystem in Gang zu setzen, nicht die Fahrerkabine aufsuchen muss, sondern es genügt, den Transponder in den Erfassungsbereich der Kommunikationsschnittstelle zu bringen. Wenn dies geschehen ist, kann vorgesehen sein, dass das Subsystem auch dann weiter läuft, wenn der Transponder den Erfassungsbereich wieder verlässt, so dass der Fahrer nach Starten des Subsystems das Fahrzeug wieder verlassen kann, um sich anderen Aufgaben zu widmen, und zurückkehren und losfahren kann, wenn ein angenehmes Klima in der Fahrerkabine erreicht ist.

Es können mehrere Subsysteme vorgesehen sein, zu deren Start unterschiedliche Berechtigungsinformationen erforderlich sind. So kann beispielsweise, wenn das Fahrzeug ein Mähdrescher ist, zum Fahren des Mähdreschers eine andere Berechtigungsinformation erforderlich sein als zum Einstellen von dessen Dreschwerk. So kann auf einfache Weise sichergestellt werden, dass ein unerfahrener Fahrer zwar das Fahrzeug bewegen, aber keine Einstellungen an einem empfindlichen Subsystem vornehmen kann, die, wenn sie unzweckmäßig sind, den wirtschaftlichen Wert der Arbeit erheblich beeinträchtigen können.

Insbesondere dann, wenn der Erfassungsbereich der Kommunikationsschnittstelle groß genug ist, um den Transponder auch dann zu erfassen, wenn er von einer Person mitgeführt wird, die ohne Absicht, das Fahrzeug zu benutzen, an diesem vorbeigeht, kann es zweckmäßig sein, wenn die Steuereinheit eingerichtet ist, das Subsystem erst dann zu starten, wenn seit Eintritt des Transponders in den Erfassungsbereich eine Wartezeit verstrichen ist. Diese Wartezeit ist typischerweise etwas länger als die Zeit, die ein Fußgänger zum Durchqueren des Erfassungsbereiches benötigt, kann also um so kürzer sein, je enger der Erfassungsbereich um die Leiter begrenzt ist. Wenn der Fahrer mit der Absicht, das Fahrzeug zu benutzen, die Leiter besteigt, wird eine solche kurze Wartezeit normalerweise ablaufen, bevor er die Fahrerkabine erreicht hat. Wenn der Fahrer etwa damit rechnet, dass die Tür der Fahrerkabine sich selbsttätig öffnet oder eine Beleuchtung der Leiter angeht, wird er gegebenenfalls unwillkürlich abwarten, dass dies geschieht, und so die Wartezeit verstreichen lassen, bevor er mit dem Besteigen der Leiter beginnt.

Zu demselben Zweck, ein unnötiges Starten der Subsysteme zu vermeiden, kann die Steuereinheit auch eingerichtet sein, das Subsystem erst dann zu starten, wenn eine den Transponder mit sich führende Person sich auf der Leiter befindet. Dies kann mit Hilfe eines zusätzlichen Sensors erreicht werden, der auf die Anwesenheit einer Person auf der Leiter anspricht; im einfachsten Fall ist die Kommunikationsschnittstelle hoch genug über dem Boden platziert, damit ein Transponder erst dann in ihren Erfassungsbereich gelangt, wenn die den Transponder mit sich führende Person die Leiter besteigt.

Gegenstand der Erfindung ist ferner eine Kombination aus einem Fahrzeug wie oben beschrieben und wenigstens einem Transponder zum Übermitteln einer Berechtigungsinformation an die Funkschnittstelle des Fahrzeugs.

Vorzugsweise ist ein solcher Transponder, wenn er sich im Erfassungsbereich befindet, mit von der Funkschnittstelle drahtlos empfangener Energie betreibbar.

Weitere Merkmale und Vorteile der Erfindung ergeben sich aus der Beschreibung von Ausführungsbeispielen unter Bezugnahme auf die beigefügte Figur.

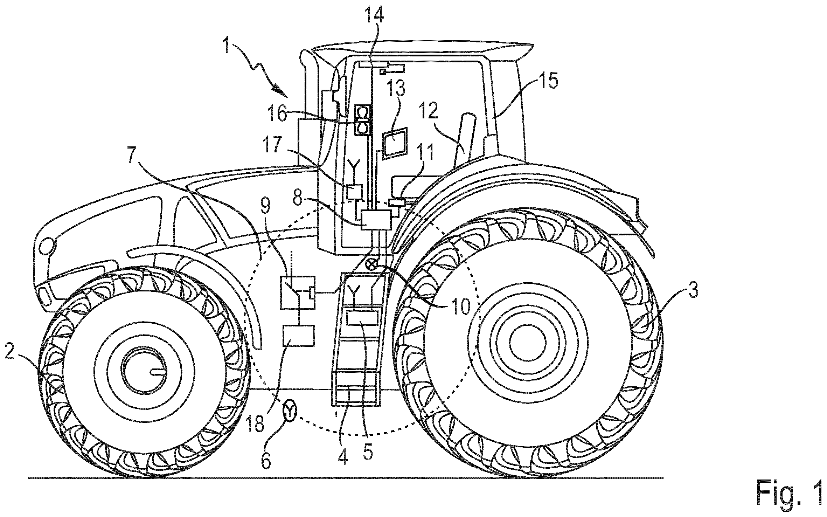

- Fig. 1: zeigt eine Seitenansicht eines Traktors als Beispiel für ein erfindungsgemäßes Fahrzeug.

Der in Fig. 1 gezeigte Traktor hat in an sich bekannter Weise eine Fahrerkabine 1, die vom Boden aus nur über eine zwischen Vorder- und Hinterrädern 2, 3 angeordnete Leiter 4 zu erreichen ist. An der Leiter 4 ist eine Funkschnittstelle 5 angeordnet, die ausgelegt ist für die Kommunikation mit einem RFID-Transponder 6. Dieser Transponder 6 ist vorgesehen, um von einem potenziellen Benutzer des Fahrzeugs, zum Beispiel an der Kleidung oder an einem Schlüsselbund, mitgeführt zu werden. Der RFID-Transponder 6 verfügt über keine eigene Energiequelle, sondern bezieht die zu seinem Betrieb erforderliche Energie aus einem von der Funkschnittstelle 5 ausgestrahlten Funksignal. Da die Intensität des Funksignals umgekehrt proportional zum Abstand von der Funkschnittstelle 5 abnimmt, ist ein Erfassungsbereich 7 der Funkschnittstelle 5, in dem die Intensität des Funksignals hoch genug ist, um den RFID-Transponder 6 zu betreiben, auf die engere Umgebung der Leiter 4 beschränkt.

Die Funkschnittstelle 5 ist verbunden mit einer Steuereinheit 8, die diverse Subsysteme des Traktors 1 steuert, hier den Batteriehauptschalter 9, und zum Beispiel eine Leuchte 10 zum Beleuchten der Leiter 4, ein Stellglied 11 zum Einstellen eines Fahrersitzes 12, einen Bordcomputer 13, ein Stellglied 14 zum Öffnen der Tür 15 der Fahrerkabine 1, eine Klimaanlage 16 sowie eine weitere Funkschnittstelle 17 innerhalb der Fahrerkabine 1.

Wenn der Batteriehauptschalter 9 geschlossen ist, sind die Funkschnittstelle 5, die Steuereinheit 8 und die Subsysteme 10 bis 17 über den Batteriehauptschalter 9 mit einer Fahrzeugbatterie 18 verbunden, um die zu ihrem Betrieb nötige Energie von dort zu beziehen. Die Funkschnittstelle 5 und die Steuereinheit 8 verfügen jeweils über einen Zwischenspeicher, der, solange der Batteriehauptschalter 9 geschlossen ist, an der Fahrzeugbatterie 18 aufgeladen wird und der einen Betrieb der Funkschnittstelle 5 und der Steuereinheit 8 ermöglicht, wenn der Batteriehauptschalter 9 offen ist.

Bei offenem Batteriehauptschalter 9 sendet die Funkschnittstelle 5 regelmäßig einen Funkimpuls aus, der einen in der Nähe befindlichen RFID-Transponder 6 veranlasst, ein Antwortsignal zu liefern. Der Impuls kann energiereich genug sein, um dem RFID-Transponder 6 in dem Antwortsignal die Übertragung einer in ihm gespeicherten Identitätsinformation an die Funkschnittstelle 5 zu ermöglichen. Alternativ kann vorgesehen sein, dass die Funkschnittstelle 5 bei Empfang eines Antwortsignals, das noch keine Identitätsinformation enthält, einen zweiten, stärkeren Impuls aussendet, um dem RFID-Transponder 6 ausreichend Energie zum Übertragen der Identitätsinformation zur Verfügung zu stellen.

Dem Traktor können mehrere RFID-Transponder 6 zugeordnet sein, die idealerweise jeweils nur von genau einem Fahrer genutzt werden. Jeder dieser RFID-Transponder 6 überträgt eine für ihn spezifische Identitätsinformation an die Funkschnittstelle 5. Diese verschiedenen Identitätsinformationen sind sämtlich in der Steuereinheit 8 hinterlegt. Wenn eine von der Funkschnittstelle 5 empfangene Identitätsinformation mit keiner der hinterlegten Identitätsinformationen übereinstimmt, wird sie verworfen und führt zu keiner weiteren Reaktion. Bei Übereinstimmung schließt die Steuereinheit 8 den Batteriehauptschalter 9, so dass die für den Betrieb der übrigen Subsysteme 10 bis 17 erforderliche Betriebsspannung zur Verfügung steht. Die Leuchte 10 kann zusammen mit dem Schließen des Batteriehauptschalters 9 eingeschaltet werden; es kann auch ein Umgebungslichtsensor vorgesehen sein, um die Leuchte 10 nur in dunkler Umgebung zu betreiben. Der Bordcomputer 13 beginnt bei Anliegen der Betriebsspannung mit dem Hochfahren. Das Stellglied 14 wird angesteuert, um die Tür 15 zu öffnen.

Die Entfernung zwischen Funkschnittstelle 5 und Transponder 6, ab der eine Übertragung der Identitätsinformation möglich ist, kann in Abhängigkeit von der Bauart der Tür 15 gewählt sein: wenn der Fahrer auf der Leiter 4 stehen kann, ohne dass Gefahr besteht, dass er von der sich öffnenden Tür 15 getroffen wird, dann ist es zweckmäßig, den Erfassungsbereich 7 der Funkschnittstelle 5 so klein zu machen, dass ein vom Fahrer getragener RFID-Transponder 6 die Identitätsinformation nur dann übertragen kann, wenn der Fahrer sich auf der Leiter 4 befindet. So kann vermieden werden, dass unnötigerweise die Tür 15 geöffnet wird und andere Subsysteme gestartet werden, wenn der Fahrer nur an der Leiter 4 vorbeigeht.

Wenn hingegen die Tür 15 nicht problemlos geöffnet werden kann, wenn sich der Fahrer bereits auf der Leiter 4 befindet, dann muss der Erfassungsbereich 7 auch den Raum am Boden vor der Leiter 4 mit umfassen, damit die Steuereinheit 8 die Tür 15 rechtzeitig öffnen kann. Um ein unnötiges Öffnen zu vermeiden, kann hier vorgesehen werden, dass die Steuereinheit 8 nach erstmaliger Erfassung des Transponders 6 eine Zeitlang, zum Beispiel den Zeitabstand zwischen zwei Impulsen, abwartet, und die Tür 15 nur dann öffnet, wenn sich auch nach dieser Wartezeit der Transponder 6 noch im Erfassungsbereich 7 der Funkschnittstelle 5 befindet.

Zu jeder Identitätsinformation kann an der Steuereinheit 8 eine Stellung des Fahrersitzes 12 hinterlegt sein, die mithilfe des Stellgliedes 11 angefahren wird, sobald an diesem die Batteriespannung anliegt. So befindet sich der Fahrersitz 12 bereits in einer an den jeweiligen Fahrer angepassten Stellung, wenn dieser die Fahrerkabine 1 erreicht hat und auf dem Sitz 12 Platz nimmt.

Wenn der Transponder 6 zwar lange genug im Erfassungsbereich 7 gewesen ist, um das Schließen des Hauptschalters und das Starten der Subsysteme 10-17 auszulösen, der Fahrer sich aber letztlich wieder vom Fahrzeug entfernt, ohne die Fahrerkabine 1 betreten zu haben, können die meisten der Subsysteme wieder ausgeschaltet werden, sobald der Transponder 6 sich nicht mehr im Erfassungsbereich 7 befindet. Die Klimaanlage 16 läuft jedoch wenigstens so lange noch weiter, bis entweder eine vorgegebene Betriebszeit abgelaufen oder eine Solltemperatur in der Fahrerkabine 1 erreicht ist, so dass, wenn der Fahrer zu einem späteren Zeitpunkt zurückkehrt, eine angenehme Temperatur in der Kabine 1 herrscht.

Wenn zusammen mit dem Fahrer auch dessen Transponder 6 die Fahrerkabine 1 erreicht hat, befindet er sich nicht mehr im Erfassungsbereich 7 der Funkschnittstelle 5, stattdessen aber in dem Erfassungsbereich der Funkschnittstelle 17. Dass letztere die Identitätsinformation vom Transponder 6 empfängt, ist Voraussetzung dafür, dass die Steuereinheit 8 die Zündung des Traktors freigibt und dieser tatsächlich in Gang gesetzt werden kann.

### Bezugszeichen

- 1: Fahrerkabine
- 2: Vorderrad
- 3: Hinterrad
- 4: Leiter
- 5: Funkschnittstelle
- 6: Transponder
- 7: Erfassungsbereich
- 8: Steuereinheit
- 9: Batteriehauptschalter
- 10: Leuchte
- 11: Stellglied
- 12: Fahrersitz
- 13: Bordcomputer
- 14: Stellglied
- 15: Tür
- 16: Klimaanlage
- 17: Funkschnittstelle

## Patentansprüche

1. Fahrzeug, insbesondere landwirtschaftliches Fahrzeug, mit einer Fahrerkabine (1), einer Kommunikationsschnittstelle (5) zum berührungslosen Empfangen einer Identitätsinformation und einer Steuereinheit (8) zum Prüfen der Identitätsinformation und Starten eines oder mehrerer Subsysteme des Fahrzeugs bei positivem Ausgang der Prüfung, **dadurch gekennzeichnet, dass** die Fahrerkabine (1) über eine Leiter (4) zugänglich ist und die Kommunikationsschnittstelle (5) benachbart zur Leiter (4) angeordnet ist, um von einem Transponder (6), wenn dieser sich in einem Erfassungsbereich der Kommunikationsschnittstelle (5) am Fuß der Leiter (4) befindet, die Identitätsinformation zu empfangen, wobei eines der Subsysteme ein Batteriehauptschalter (9) ist, der beim Starten eine Fahrzeugbatterie (18) mit einem Bordnetz des Fahrzeugs verbindet, und dass die Funkschnittstelle (5) und die Steuereinheit (8) einen eigenen Energiespeicher haben, um betreibbar zu sein, wenn die Fahrzeugbatterie (18) vom Bordnetz getrennt ist.

2. Fahrzeug nach Anspruch 1, **dadurch gekennzeichnet, dass** eines der Subsysteme ein Stellglied (14) zum Bewegen einer Tür (15) der Fahrerkabine (1) in eine offene Stellung ist.

3. Fahrzeug nach Anspruch 1 oder 2, **dadurch gekennzeichnet, dass** eines der Subsysteme eine Leuchte (10), insbesondere zum Beleuchten der Leiter (4), ist.

4. Fahrzeug nach einem der vorhergehenden Ansprüche, **dadurch gekennzeichnet, dass** eines der Subsysteme ein Bordcomputer (13) ist.

5. Fahrzeug nach einem der vorhergehenden Ansprüche, **dadurch gekennzeichnet, dass** eines der Subsysteme ein Stellglied (11) zum Einstellen eines Fahrersitzes (12) ist.

6. Fahrzeug nach einem der vorhergehenden Ansprüche, **dadurch gekennzeichnet, dass** eines der Subsysteme eine Heizung, Lüftung oder Klimaanlage (16) ist.

7. Fahrzeug nach einem der vorhergehenden Ansprüche, **dadurch gekennzeichnet, dass** es wenigstens zwei Subsysteme aufweist, zu deren Start unterschiedliche Berechtigungsinformationen erforderlich sind.

8. Fahrzeug nach einem der vorhergehenden Ansprüche, **dadurch gekennzeichnet, dass** die Steuereinheit (8) eingerichtet ist, das Subsystem (14) erst dann zu starten, wenn seit Eintritt des Transponders (6) in den Erfassungsbereich (7) eine Wartezeit verstrichen ist.

9. Fahrzeug nach einem der vorhergehenden Ansprüche, **dadurch gekennzeichnet, dass** die Steuereinheit (8) eingerichtet ist, das Subsystem erst dann zu starten, wenn eine den Transponder (6) mit sich führende Person sich auf der Leiter (4) befindet.

10. Kombination aus einem Fahrzeug nach einem der vorhergehenden Ansprüche und wenigstens einem Transponder (6) zum Übermitteln einer Berechtigungsinformation an die Funkschnittstelle (5).

11. Kombination nach Anspruch 10, **dadurch gekennzeichnet, dass** der Transponder (6) im Erfassungsbereich (7) mit von der Funkschnittstelle (5) drahtlos empfangener Energie betreibbar ist.

## Claims

1. A vehicle, in particular an agricultural vehicle, comprising a driver's cab (1), a communication interface (5) for contactlessly receiving an identity information and a control unit (8) for checking the identity information and starting one or more subsystems of the vehicle upon a positive outcome of the check, **characterised in that** the driver's cab (1) is accessible by way of a ladder (4) and the communication interface (5) is arranged adjacent to the ladder (4) to receive the identity information from a transponder (6) when same is in a detection region of the communication interface (5) at the foot of the ladder (4), wherein one of the subsystems is a main battery switch (9) which when starting connects a vehicle battery (18) to an on-board power system of the vehicle and the radio interface (5) and the control unit (8) have a dedicated energy storage means to be operable if the vehicle battery (18) is separated from the on-board power system.

2. A vehicle according to claim 1 **characterised in that** one of the subsystems is an actuating member (14) for moving a door (15) of the driver's cab (1) into an open position.

3. A vehicle according to claim 1 or claim 2 **characterised in that** one of the subsystems is a light (10), in particular for lighting the ladder (4).

4. A vehicle according to one of the preceding claims **characterised in that** one of the subsystems is an on-board computer (1).

5. A vehicle according to one of the preceding claims **characterised in that** one of the subsystems is an actuating member (11) for adjusting a driving seat (12).

6. A vehicle according to one of the preceding claims **characterised in that** one of the subsystems is a heating means, a ventilation means or an air-conditioning installation (16).

7. A vehicle according to one of the preceding claims **characterised in that** it has at least two subsystems, for the start of which different authorisation information is required.

8. A vehicle according to one of the preceding claims **characterised in that** the control unit (18) is adapted to start the subsystem (14) only when a waiting time has elapsed since the transponder (6) moved into the detection region (7).

9. A vehicle according to one of the preceding claims **characterised in that** the control unit (8) is adapted to start the subsystem only when a person carrying the transponder (6) is on the ladder (4).

10. A combination comprising a vehicle according to one of the preceding claims and at least one transponder (6) for communicating authorisation information to the radio interface (5).

11. A combination according to claim 10 **characterised in that** the transponder (6) is operable in the detection region (7) with energy wirelessly received from the radio interface (5).

## Revendications

1. Véhicule, en particulier véhicule agricole, comprenant une cabine de conduite (1), une interface de communication (5) pour recevoir sans contact une information d'identité et une unité de commande (8) pour vérifier l'information d'identité et mettre en marche un ou plusieurs sous-systèmes du véhicule en cas d'issue positive de la vérification, **caractérisé en ce que** la cabine de conduite (1) est accessible par l'intermédiaire d'une échelle (4) et l'interface de communication (5) est disposée au voisinage de l'échelle (4) pour recevoir l'information d'identité d'un transpondeur (6) lorsque celui-ci se trouve dans une zone de détection de l'interface de communication (5) au pied de l'échelle (4), un des sous-systèmes étant un interrupteur principal de batterie (9) qui, à la mise en marche, relie une batterie de véhicule (18) à un réseau de bord du véhicule, et **en ce que** l'interface radio (5) et l'unité de commande (8) ont un accumulateur d'énergie propre pour pouvoir être exploitables lorsque la batterie de véhicule (18) est séparée du réseau de bord.

2. Véhicule selon la revendication 1, **caractérisé en ce qu'**un des sous-systèmes est un actionneur (14) pour déplacer une porte (15) de la cabine de conduite (1) dans une position ouverte.

3. Véhicule selon la revendication 1 ou 2, **caractérisé en ce qu'**un des sous-systèmes est une lampe (10), en particulier pour éclairer l'échelle (4).

4. Véhicule selon une des revendications précédentes, **caractérisé en ce qu'**un des sous-systèmes est un ordinateur de bord (13).

5. Véhicule selon une des revendications précédentes, **caractérisé en ce qu'**un des sous-systèmes est un actionneur (11) pour régler un siège de chauffeur (12).

6. Véhicule selon une des revendications précédentes, **caractérisé en ce qu'**un des sous-systèmes est un chauffage, une ventilation ou une climatisation (16).

7. Véhicule selon une des revendications précédentes, **caractérisé en ce qu'**il comporte au moins deux sous-systèmes dont la mise en marche est subordonnée à différentes informations d'habilitation.

8. Véhicule selon une des revendications précédentes, **caractérisé en ce que** l'unité de commande (8) est agencée de façon à ne mettre en marche le sous-système (14) que lorsqu'un temps d'attente s'est écoulé à partir de l'entrée du transpondeur (6) dans la zone de détection (7).

9. Véhicule selon une des revendications précédentes, **caractérisé en ce que** l'unité de commande (8) est agencée de façon à ne mettre en marche le sous-système que lorsqu'une personne portant sur elle le transpondeur (6) se trouve sur l'échelle (4).

10. Combinaison d'un véhicule selon une des revendications précédentes et d'au moins un transpondeur (6) pour transmettre une information d'habilitation à l'interface radio (5).

11. Combinaison selon la revendication 10, **caractérisée en ce que**, dans la zone de détection (7), le transpondeur (6) peut être exploité avec l'énergie reçue sans fil de l'interface radio (5).
